# EUROPEAN PATENT APPLICATION

(11) **EP 2 937 228 A1**
(43) Date of publication of application: **28.10.2015**
(21) Application number: 14165867.4
(22) Date of filing: 24.04.2014
(51) Int. Cl.: B60B 27/02, F16D 1/10

(54) **Quick detaching inner clutch**

(71) Applicant: NEW KAILUNG GEAR CO., LTD., Kaohsiung (TW)
(72) Inventor: Liu, Jen-Chih, Kaohsiung (CN)
(74) Representative: Treeby, Philip David William

(57) **Abstract**

A quick detaching inner clutch comprises an inner clutch; a fixing shaft for assembling the inner clutch; a hub for receiving the inner clutch and the fixing shaft; wherein an axial center of the fixing shaft is formed with a penetrating axial channel for receiving a quick detaching body. After the quick detaching body passes through the penetrating axial channel which is screwed with a nut. The hub and two lateral cover at two sides of the hub are formed with a space for receiving the inner clutch and the fixing shaft passes the two lateral covers. Furthermore, an outer surface of the fixing shaft is axially formed with at least one concave or convex enhancing rib.

## Description

### FIELD OF THE INVENTION

The present invention related to bike components, and in particular to a quick detaching inner clutch.

### BACKGROUND OF THE INVENTION

Quick detaching has been a new trend in assembly of bikes. The quick detaching also means quick assembly so that the assembly of the element is simplified. The whole assembly time is reduced and assembly efficiency is promoted.

However, in all prior art about the assembly of a bike, no prior art relates to the clutch. This is because the bike clutch has a complicated structure and is related to the installation and steering of the bike. Therefore, the manufactures of bikes do not consider to apply quick detaching technology in bikes. As a result, the assembly of bike is time tedious and labor wasted.

Moreover, the prior art clutch causes that gears are installed outsides, but current inner clutches are used to bike design, in that the inner clutch is hidden in a hub. This kind of clutches is classified as chained bikes and chainless bikes based on external transfer powers.

However, inventor of the present invention is aimed to design a quick detaching technology which is both suitable for chained and chainless bikes.

### SUMMARY OF THE INVENTION

Accordingly, to resolve above mentioned problem, the present invention provides a quick detaching inner clutch, wherein the present invention provides a quick detaching body providing for the inner clutches of chainless bikes or chain bikes; the quick detaching body can cause that the inner clutch of a bike can be detached with the frame of the bike effectively so that the assembly and maintenance efficiency is promoted. The space occupied is saved and the weight of the bike is reduced. The axial center of the fixing shaft for retaining the inner clutch has a penetrating axial channel and a quick detaching body passes through the channel so that the inner clutch can be detached from the hub and frame of the bike easily and quickly.

To achieve above object, the present invention provides a quick detaching inner clutch comprising: an inner clutch; a fixing shaft for assembling the inner clutch; a hub for receiving the inner clutch and the fixing shaft; wherein an axial center of the fixing shaft is formed with a penetrating axial channel. The penetrating axial channel serves for receiving a quick detaching body; after the quick detaching body passes through the penetrating axial channel which is screwed with a nut. The hub and two lateral cover at two sides of the hub are formed with a space for receiving the inner clutch and the fixing shaft passes the two lateral covers. Furthermore, an outer surface of the fixing shaft is axially formed with at least one concave or convex enhancing rib.

### BRIEF DESCRIPTION OF THE DRAWINGS

Fig. 1 is an assembly schematic view about a chainless inner clutch with power transfer along a fixing shaft according to the present invention.
Fig. 2 is a schematic view showing an assembled structure of the embodiment shown in Fig. 1.
Fig. 3 is an assembly schematic view about a chained inner clutch with power transfer along a fixing shaft according to the present invention.
Fig. 4 is a schematic view showing an assembled structure of the embodiment shown in Fig. 3.
Fig. 5 shows an embodiment about the fixing shaft of an inner clutch according to the present invention.
Fig. 6 is a right side view of the Fig. 5.
Fig. 7 is a cross sectional view along line A-A of Fig. 5.
Fig. 8 is a cross sectional view along line B-B of Fig. 6.
Fig. 9 shows another embodiment about the fixing shaft of an inner clutch according to the present invention.
Fig. 10 is a right side view of Fig. 9.
Fig. 11 is a cross sectional view along line C-C of Fig. 10.
Fig. 12 is cross sectional view along line D-D of Fig. 10.
Fig. 13 shows an application of the fixing shaft shown in Fig. 5.
Fig. 14 is a cross sectional view along line E-E of Fig. 13.
Fig. 15 shows an application of the fixing shaft of Fig. 9.
Fig. 16 is a cross sectional view along line F-F of Fig. 15.

### BRIEF DESCIPTION OF THE INVENTION

In order that those skilled in the art can further understand the present invention, a description will be provided in the following in details. However, these descriptions and the appended drawings are only used to cause those skilled in the art to understand the objects, features, and characteristics of the present invention, but not to be used to confine the scope and spirit of the present invention defined in the appended claims.

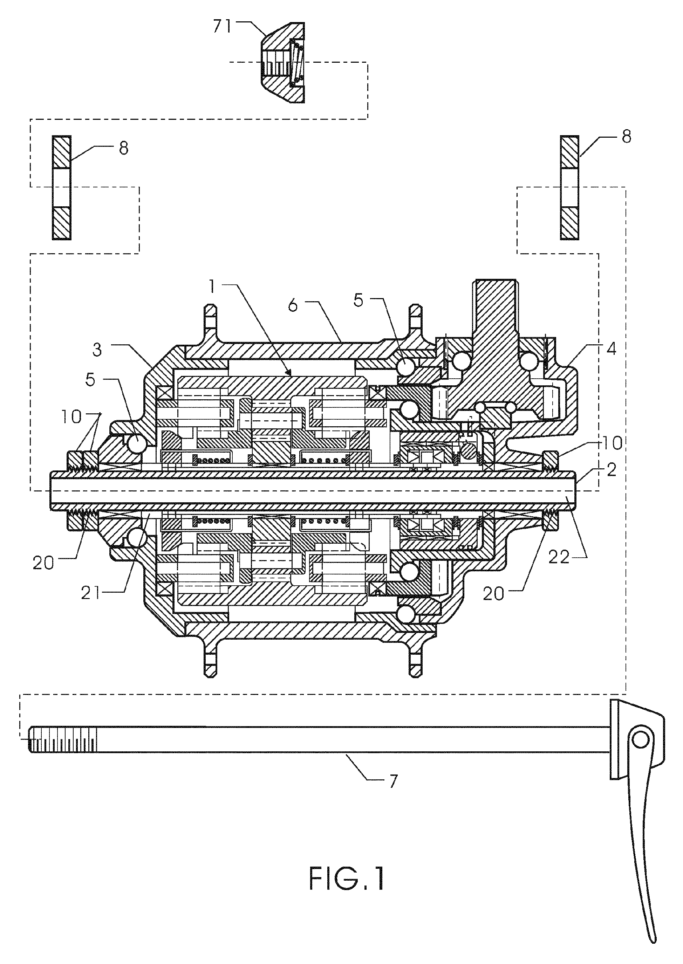

With reference to Figs. 1 to 16, the structure of the present invention are illustrated.

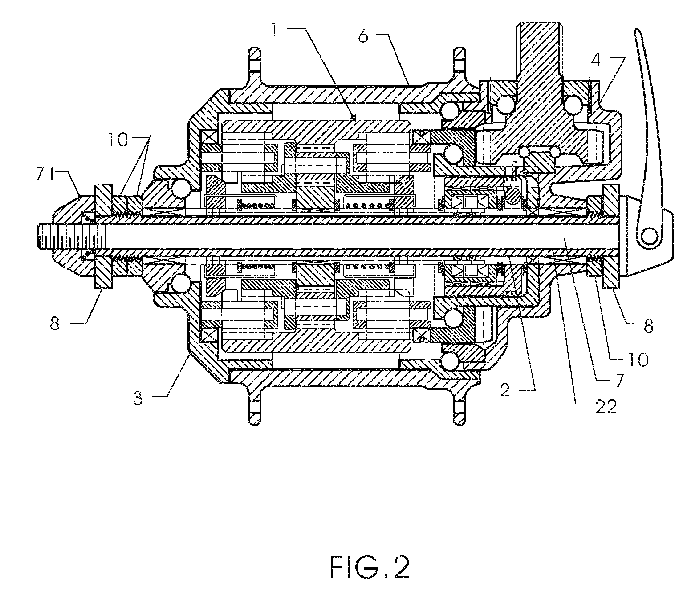

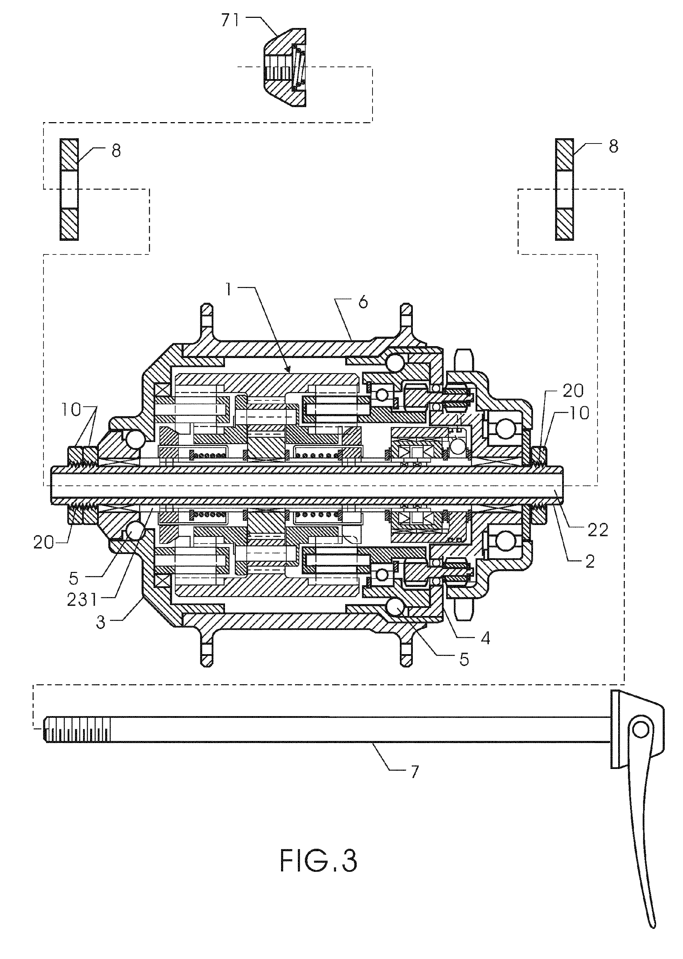

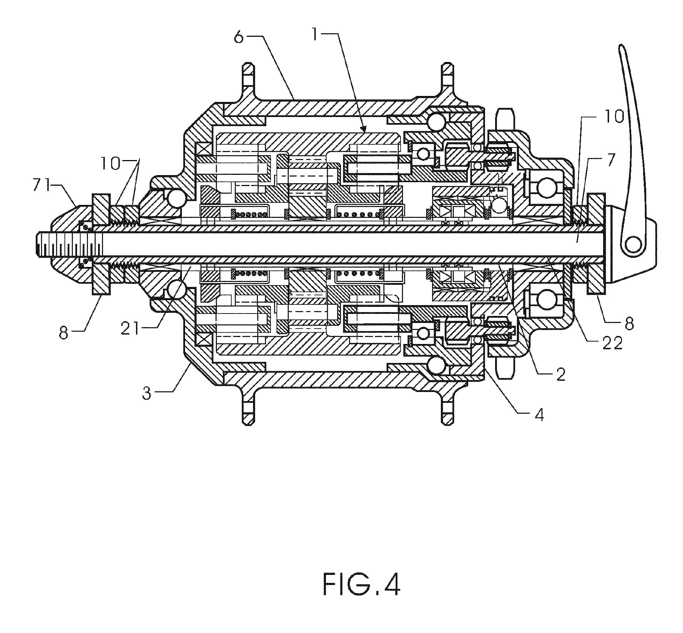

With reference to Figs. 1 to 4, in that Figs. 1 and 2 show an embodiment of an inner clutch about a chainless bike power transfer. Figs. 3 and 4 show an embodiment of an inner clutch about a chained bike power transfer. The two embodiments have identical structure about the inner clutch, while only one for chained bikes and one for chainless bikes. Thus, it is apparent that the quick detaching structure of the present invention is suitable for both chained bikes and chainless bikes.

The structure of the present invention includes the following elements. An inner clutch 1 is included.

A fixing shaft 2 serving for assembling the inner clutch 1. Each of two ends of the inner clutch 1 has a respective fixing male nut 10 for locking to outer threads 20 of the fixing shaft 2, as illustrated in Figs. 1 and 3.

A hub 6, a lateral cover 3 and a lateral cover 4 are formed with a space for receiving the inner clutch 1, and the fixing shaft 2 passes the lateral cover 3 and lateral cover 4. The lateral cover 3 and the lateral cover 4 are using a bearing 5 positioned at two sides of the hub 6.

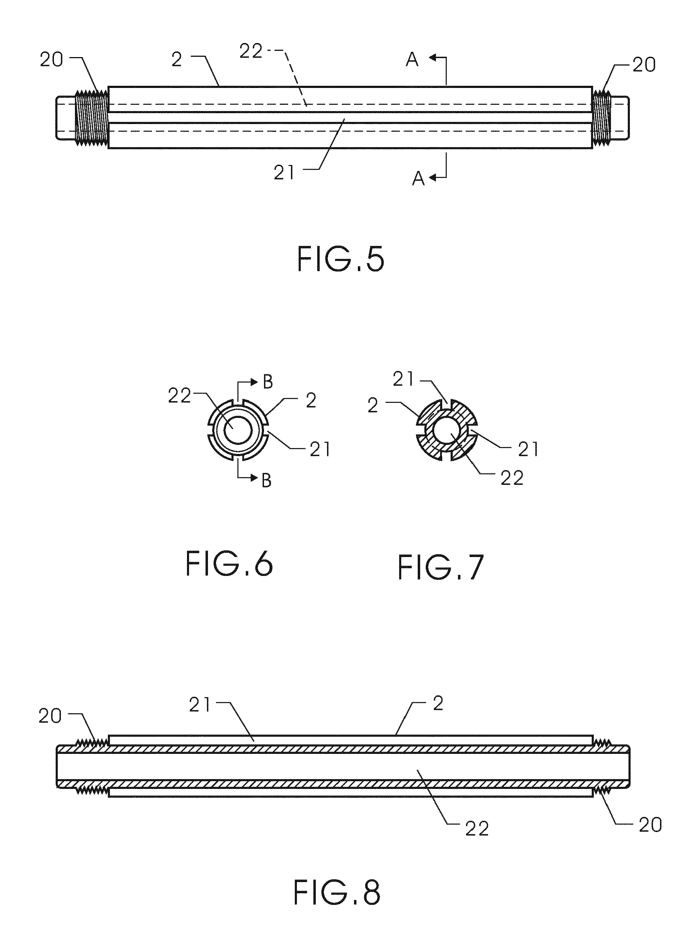

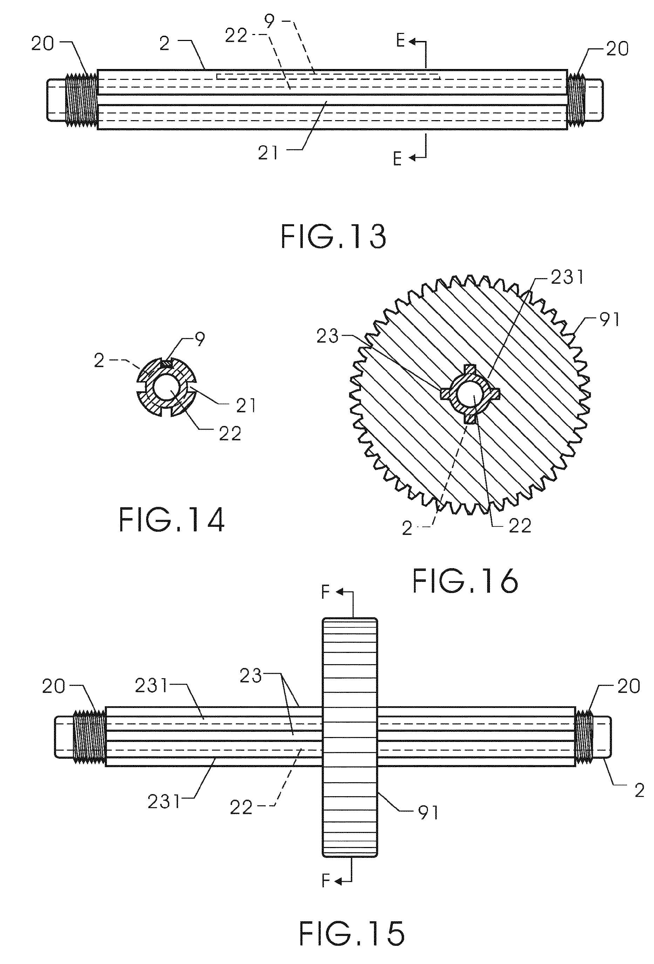

With reference to Figs. 5 to 8, the fixing shaft 2 is used to a chained inner clutch or a chainless inner clutch. Two ends of the fixing shaft 2 are formed with outer threads 20. A section of the fixing shaft 2 between the two outer threads 20 are axially formed with at least one concave enhancing rib 21 for enhancing the strength of the fixing shaft 2. With reference to Figs. 13 and 14, it is illustrated that a moving rid 9 as a switching element of the inner clutch 1 can be embedded into the at least concave enhancing rib 21. Other reciprocal elements of the inner clutch 1 may be embedded into the enhancing rib 21.

With reference to Fig. 1, an axial center of the fixing shaft 2 (shaftless) is formed with a penetrating axial channel 22 for receiving a quick detaching body 7. After the quick detaching body 7 passes through the penetrating axial channel 22 which is screwed with a nut 71. Thus, by the structure of the present invention, the inner clutch 1 assembled within the hub 6 can be quickly detached by releasing the quick detaching body 7.

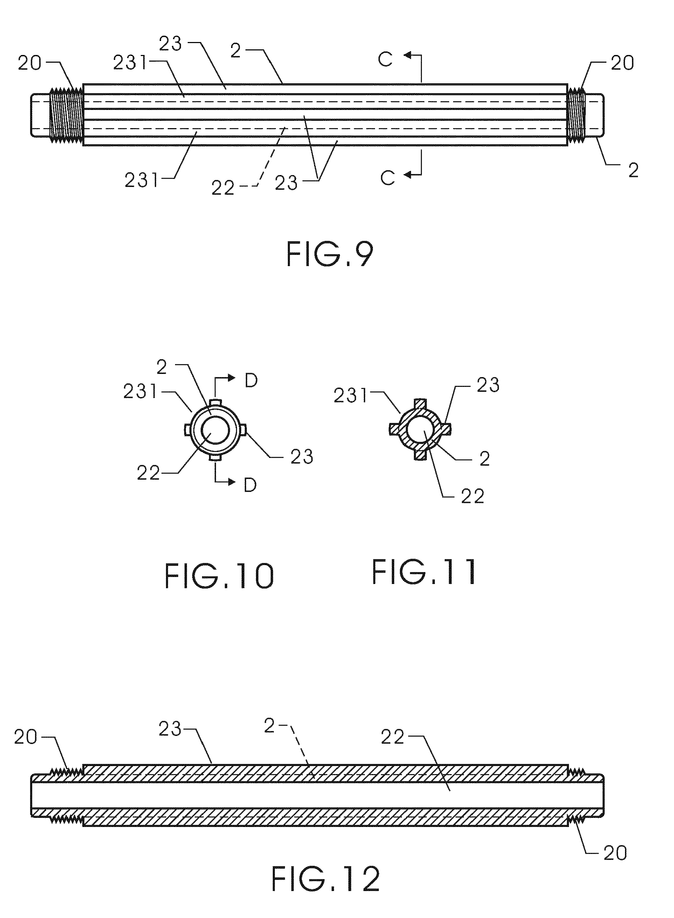

With reference to Figs. 9 to 12, the fixing shaft 2 of the present invention is used to a chain inner clutch or a chainless inner clutch. Two ends of the fixing shaft 2 are formed with outer threads 20. A section of the fixing shaft 2 between the two outer threads 20 are axially formed with at least one convex enhancing rib 23 for enhancing the strength of the fixing shaft 2. With reference to Figs. 15 and 16, it is illustrated that gaps 231 between the convex enhancing ribs 23 serve for fixing or position elements of the inner clutch 1 (such as the gear 9). An axial center of the fixing shaft 2 (shaftless) is formed with a penetrating axial channel 22 for receiving a quick detaching body 7. After the quick detaching body 7 passes through the penetrating axial channel 22 which is screwed with a nut 71. Thus, by the structure of the present invention, the inner clutch 1 assembled within the hub 6 can be quickly detached by releasing the quick detaching body 7. Therefore, the fixing shaft 2 of the inner clutch 1 causes that the inner clutch 1 is combined with the hub 6 and a bike frame 8 to have the effect of quick detachment.

Therefore, the advantages of the present invention are that: the present invention provides a quick detaching body which is provided for the inner clutches of chainless bikes or chain bikes.; the quick detaching body can cause that the inner clutch of a bike can be detached with the frame of the bike effectively so that the assembly and maintenance efficiency is promoted. The space occupied is saved and the weight of the bike is reduced. The axial center of the fixing shaft for retaining the inner clutch has a penetrating axial channel and a quick detaching body passes through the channel so that the inner clutch can be detached from the hub and frame of the bike easily and quickly.

The present invention is thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A quick detaching inner clutch comprising:
an inner clutch 1;
a fixing shaft 2 for assembling the inner clutch 1;
a hub 6 for receiving the inner clutch 1 and the fixing shaft 2;
wherein an axial center of the fixing shaft 2 is formed with a penetrating axial channel 22; and at least one enhancing rib 21 is installed along an outer surface of the fixing shaft 2.

2. The quick detaching inner clutch as claimed in claim 1, wherein the at least one enhancing rib 21 installed along an outer surface of the fixing shaft 2 is a concave enhancing rib 21.

3. The quick detaching inner clutch as claimed in claim 1, wherein the at least one enhancing rib 21 installed along an outer surface of the fixing shaft is a convex enhancing rib 23.
